Europäisches Patentamt

(19) European Patent Office

Office européen des brevets

(11) Numéro de publication : **0 291 365 B1**

(12) **FASCICULE DE BREVET EUROPEEN**

(45) Date de publication du fascicule du brevet : 13.11.91 Bulletin 91/46

(51) Int. Cl.⁵ : **G01L 5/16**

(21) Numéro de dépôt : **88400629.7**

(22) Date de dépôt : **16.03.88**

(54) **Capteur de moments de flexion-torsion.**

(30) Priorité : 19.03.87 FR 8703820

(43) Date de publication de la demande : **17.11.88 Bulletin 88/46**

(45) Mention de la délivrance du brevet : **13.11.91 Bulletin 91/46**

(84) Etats contractants désignés : **CH DE GB IT LI SE**

(56) Documents cités :
**DE-A- 2 127 466**
**FR-A- 2 226 655**
**FR-A- 2 490 342**
**US-A- 2 866 333**
**US-A- 3 434 342**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Lerat, Bernard La Tournette 1B F-74230 Thones (FR)**

(74) Mandataire : **Mongrédien, André et al c/o BREVATOME 25, rue de Ponthieu F-75008 Paris (FR)**

EP 0 291 365 B1

## Description

La présente invention se rapporte à un capteur permettant de mesurer des moments de flexion et de torsion s'exerçant entre deux ensembles mécaniques.

De nombreux capteurs permettant de mesurer les différentes composantes d'un torseur d'effort sont connus. Ils se composent généralement d'un ensemble isostatique de poutres que l'on dispose entre les deux ensembles mécaniques et qui reprennent la totalité des efforts ; dans une conception usuelle, des jauges de contrainte sont disposées sur ces poutres et leurs informations sont combinées à l'aide de montages électriques et de calculs numériques par ordinateur pour en déduire les composantes du torseur d'efforts. Des couplages entre les informations issues de ces différentes poutres sont en effet inévitables. Il en résulte donc une complication de l'appareillage alors même que certaines composantes du torseur ne sont pas demandées ou sont négligeables.

L'objet de la présente invention est donc un capteur qui ne possède pas cette complexité et qui fournisse uniquement la valeur des moments de flexion-torsion à la jonction de deux ensembles mécaniques.

Le capteur se compose alors d'une structure de liaison des deux ensembles mécaniques qui reprend les efforts et de dispositifs qui mesurent chacun l'une des composantes souhaitées. Ces informations sont alors non couplées entre elles, ce qui entraîne une simplification considérable de l'appareillage de conversion.

Dans une première version de l'invention, ces dispositifs de mesure sont des capteurs de déplacement ; le capteur est alors relativement souple, ce qui peut être contre-indiqué pour certaines applications. Dans d'autres versions du capteur, les dispositifs de mesure sont des barres équipées de moyens de mesure d'effort, moyens piézoélectriques ou jauges de contrainte par exemple. Les barres peuvent être précontraintes ou non.

Dans ces diverses versions de l'invention, les dispositifs sont sollicités en traction et en compression.

De façon plus précise, l'invention concerne un capteur des moments de flexion et de torsion s'exerçant entre deux ensembles mécaniques, caractérisé en ce qu'il comprend, accouplées chacune à un des ensembles, deux structures rigides comportant des plateaux sensiblement parallèles, une poutre élastique reliant les deux plateaux rigides et sensiblement perpendiculaire à ceux-ci, un premier dispositif de mesure de déplacement ou d'effort caractérisant le moment de torsion de la poutre, et un second dispositif de mesure de déplacement ou d'effort caractérisant un des moments de flexion de la poutre, les dispositifs de mesure étant reliés aux deux structures rigides et le second dispositif étant sensiblement rectiligne et parallèle à la poutre.

Chacun des dispositifs peut se composer de deux parties disjointes dont chacune est reliée à une des structures rigides et dont on mesure le déplacement relatif. Chaque dispositif peut également se composer d'un élément déformable relié à chacune des structures rigides par des barres indéformables.

Afin d'éviter l'apparition de sollicitations parasites dans les dispositifs, on peut relier les dispositifs de mesure à chacune des structures rigides par l'intermédiaire de rotules.

Enfin, selon une disposition avantageuse, les dispositifs de mesure peuvent être précontraints de manière à mesurer une sollicitation qui conserve toujours le même signe quel que soit le sens des efforts appliqués entre les deux ensembles mécaniques.

On va maintenant décrire concrètement les modes de réalisation préférés de l'invention à l'aide des figures annexées dont l'énumération suit, et qui sont données à titre illustratif et non limitatif :

— la figure 1 représente un premier mode de réalisation de l'invention,

— la figure 2 représente un deuxième mode de réalisation de l'invention,

— la figure 3 représente un troisième mode de réalisation de l'invention, et

— la figure 4 représente une application particulière de l'invention.

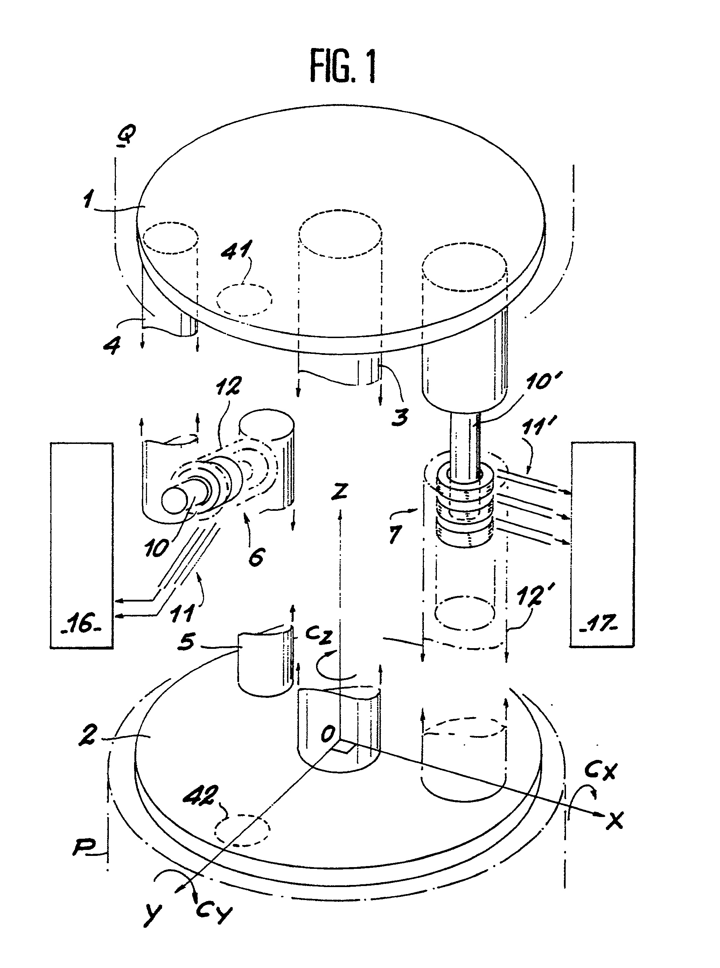

Les figures 1 à 3 sont des représentations en éclaté permettant une compréhension plus facile.

A l'aide de la figure 1, on mentionne tout d'abord les parties communes aux différents modes de réalisation proposés : le capteur comprend tout d'abord deux plateaux rigides 1 et 2 reliés respectivement à deux ensembles mécaniques P et Q entre lesquels s'exercent un moment de torsion CZ autour d'un axe Z et un moment de flexion CY autour d'un axe Y. Les plateaux rigides 1 et 2 sont reliés entre eux par une poutre élastique déformable 3 que l'on a représentée ici circulaire, mais qui peut être formée d'un profilé quelconque et qui peut aussi être conique par exemple. Chacun des plateaux 1 et 2 est muni d'une barre rigide 4 et 5 sur sa périphérie, qui s'étend dans la direction de l'autre plateau et s'arrête à mi-distance environ. Il apparaît un intervalle entre les deux barres 4 et 5, entre lesquelles on installe un dispositif 6 parallèle aux plateaux rigides 1 et 2 qui mesure le moment de torsion CZ entre les plateaux rigides 1 et 2. On installe également, entre les deux plateaux rigides 1 et 2, un dispositif 7 parallèle à la poutre élastique 3 qui mesure le moment de flexion CY tendant à rapprocher ou à éloigner les points des plateaux rigides 1 et 2 où le dispositif 7 se raccorde.

La poutre 3, perpendiculaire aux plateaux rigides 1 et 2, est dimensionnée de manière à offrir peu de résistance aux moments CY et CZ alors qu'elle est rigide vis-à-vis des autres composantes du torseur des forces appliquées, c'est-à-dire aux efforts normaux et tranchants ainsi qu'éventuellement au moment de flexion CX qui s'exerce perpendiculairement à CY.

L'originalité du premier mode de réalisation de l'invention consiste en ce que les différents dispositifs de mesure comportent des capteurs de déplacement formés de deux parties disjointes : un noyau magnétique 10 (respectivement 10') est relié à une des barres 4 pour le dispositif 6 et à un des plateaux rigides 1 pour le dispositif 7 ; des supports 12 et 12' contenant chacun une ou plusieurs bobines d'induction 11 et 11' sont reliés respectivement au deuxième plateau 2 et à la deuxième barre 5 de façon à ce que l'extrémité des noyaux magnétiques 10 et 10' pénètre à l'intérieur des bobines 11 et 11'.

Les courants électriques parcourant les bobines 11 et 11' sont créés et mesurés respectivement par des ensembles référencés 16 pour le dispositif de mesure de torsion 6 et 17 pour le dispositif de mesure de flexion 7.

La poutre 3 est alors seule à reprendre les efforts qui s'exercent entre les deux ensembles mécaniques P et Q. Sa déformation agit sur les dispositifs 6 et 7 : la variation de la position des noyaux magnétiques 10 et 10' dans les bobines 11 et 11' entraîne une modification des caractéristiques des courants induits qui parcourent ces dernières. On peut donc facilement obtenir les informations concernant les déplacements engendrés par le moment de torsion CZ et le moment de flexion CY.

On constate immédiatement que l'application d'un des moments CY ou CZ ne fait varier l'enfoncement du noyau magnétique 10 ou 10' dans les bobines 11 ou 11' que pour un seul des dispositifs de mesure. Sa seule action sur l'autre dispositif de mesure est de faire varier la position radiale du noyau magnétique 10' ou 10 dans les bobines 11' ou 11. Cette modification de position radiale est toutefois insuffisante pour entraîner une modification significative des courants induits dans ces autres dispositifs de mesure. On peut donc considérer que les dispositifs de mesure fonctionnent de manière découplée et fournissent donc des informations que l'on peut traiter indépendamment.

On peut encore introduire, sans sortir du cadre de l'invention, un dispositif identique à 7 et décalé angulairement de 90°, qui mesure le moment de flexion CX. On a représenté une telle position par les traces 41 et 42 des raccordements d'un tel dispositif avec les deux plateaux rigides 1 et 2 ; comme sa constitution peut être éventuellement exactement semblable à celle du dispositif 7, elle n'a pas été représentée ici.

Les mesures des déformations des trois dispositifs restent découplées.

L'inconvénient majeur de ce mode de réalisation de l'invention, dans le cas de son application à l'usinage, consiste en ce que le capteur est relativement souple ou compliant et peut donc subir des déformations jugées excessives pour la qualité de l'opération exécutée. C'est pour pallier ce défaut qu'on a conçu les modes de réalisation qui vont maintenant être décrits.

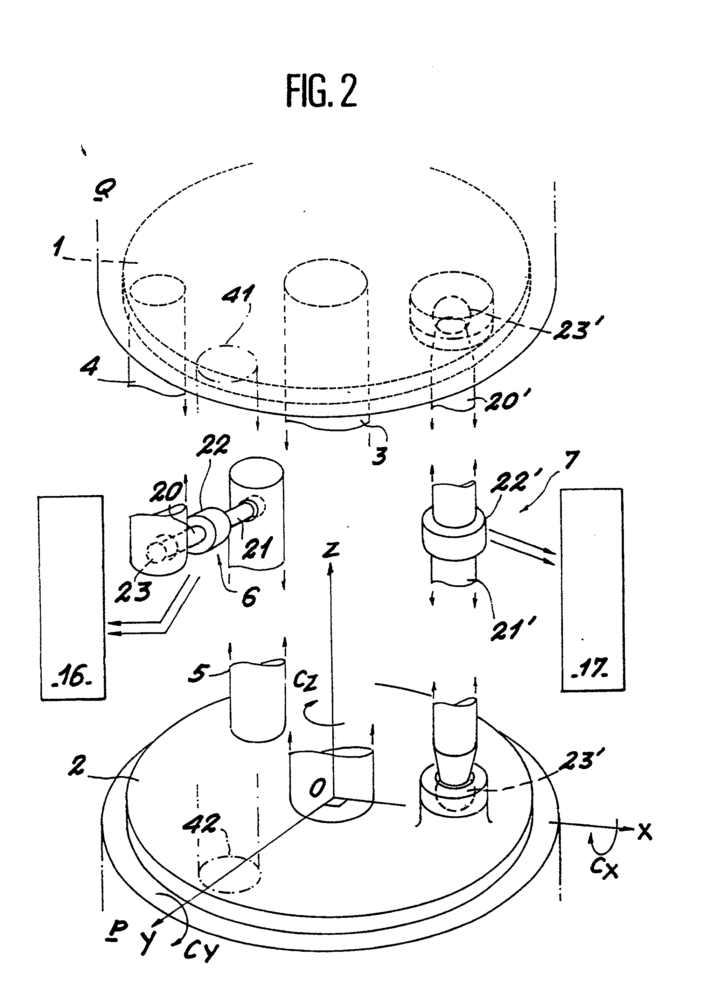

Sur la figure 2, les dispositifs 6 ou 7 sont maintenant chacun constitués par une paire de barres 20 et 21 ou 20' et 21' reliées chacune respectivement à une des barres 4 et 5 ou à un des plateaux rigides 1 et 2, et reliées entre elles par un élément sensible 22 ou 22' qui permet de mesurer les efforts de traction ou de compression subis par les barres 20 et 21 ou 20' et 21' et qui peut être, par exemple, un détecteur piézoélectrique. A la place des barres 20 et 21 (ou 20' et 21'), on peut aussi envisager un dispositif équivalent constitué d'une barre unique sur laquelle on installe des jauges de contrainte. Cette réalisation n'est pas représentée ici.

Les dispositifs 6 et 7 représentés figure 2 confèrent donc une rigidité beaucoup plus importante au capteur. Le découplage entre les informations des différents dispositifs 6 et 7 existe toujours dans ce mode de réalisation.

Il est toutefois préférable de se prémunir contre les efforts parasites qui pourraient être engendrés lors du montage des barres 20 et 21 ou 20' et 21' sur les plateaux rigides 1 et 2. Pour cela, les extrémités des barres 20 et 21 ou 20' et 21' par lesquelles s'effectue la liaison avec les barres 4 et 5 ou les plateaux rigides 1 et 2 sont équipées de rotules 23 ou 23' qui ne modifient pas le comportement des dispositifs 6 et 7 en traction-compression.

Là encore, il est possible de placer entre les traces de raccordement 41 et 42 un dispositif permettant la mesure du moment de flexion CX dans les mêmes conditions que pour la figure 1 et qui peut être semblable au dispositif permettant la mesure du moment de flexion CY, désigné par 7 sur la figure 2.

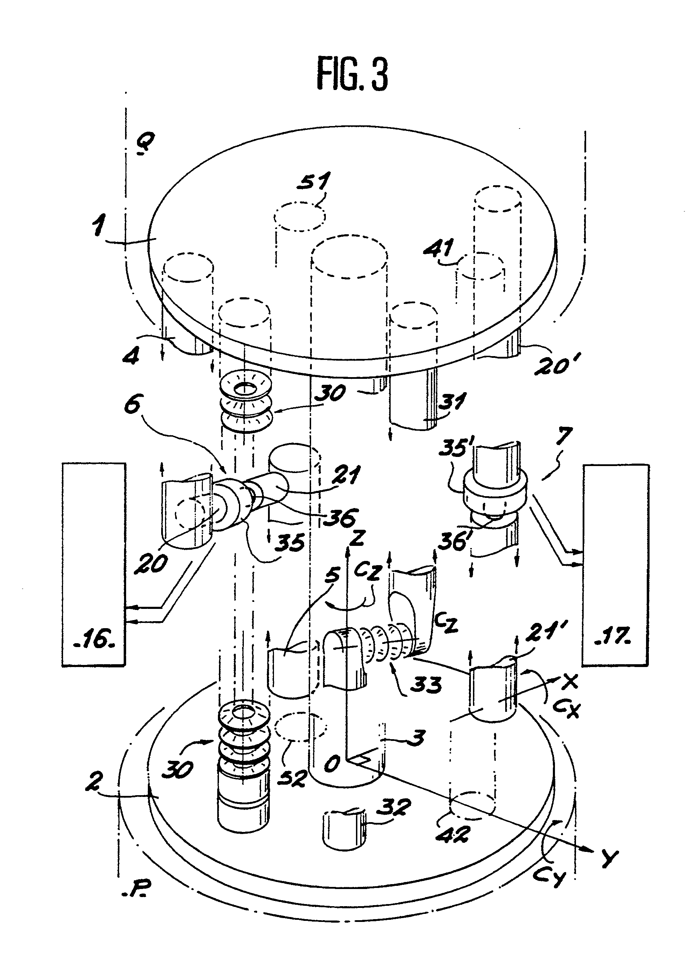

La figure 3 montre un mode de réalisation qui constitue un perfectionnement que l'on peut apporter à celui de la figure 2, et d'après lequel les dispositifs 6 et 7 sont précontraints par des moyens élastiques. Cette disposition permet, pour certaines applications où les moments de torsion et de flexion mesurés CY et CZ peuvent changer de sens, de ne mesurer malgré tout que des valeurs de déformation de même signe sur les dispositifs 6 et 7 et de n'utiliser par exemple que des dispositifs de mesure d'effort de compression par exemple ; ces valeurs peuvent ensuite être corrigées d'un facteur constant et connu pour supprimer l'influence de la précontrainte.

La précontrainte du dispositif 7 est assurée par exemple par un empilement (30) de rondelles en coupelles ou tronçons de cône, dites rondelles Belleville, d'axe parallèle à l'axe de la poutre élastique, entre les deux plateaux rigides 1 et 2 dans une position opposée au dispositif 7 par rapport à la poutre élastique 3.

Le dispositif 6 est précontraint de façon analogue à l'aide d'un empilement 33 de rondelles Belleville disposées dans un plan à mi-distance des plateaux rigides 1 et 2, entre deux barres 31 et 32 reliées respectivement aux plateaux 1 et 2 ; cet empilement a un axe perpendiculaire à l'axe de la poutre 3 et il est diamétralement opposé au dispositif 6. L'empilement 30 crée donc un moment de précontrainte qui se traduit ici par une compression du dispositif 7, tandis que l'empilement 33 crée un moment de précontrainte en torsion de la poutre élastique 3 qui se traduit ici par une compression du dispositif 6.

Ce mode de réalisation-ci présente deux avantages.

Tout d'abord, la présence d'un mécanisme à rotule, tel que celui représenté figure 2, et qui était obligatoire pour des capteurs de traction-compression reliés rigidement aux barres 20 et 21 ou 20' et 21', n'a plus sa raison d'être ici, car dans le cas de précontraintes de compression, l'élément travaillant en traction-compression 22 ou 22' peut être remplacé par un élément 35 ou 35' travaillant uniquement en compression, en appui contre une seule des barres 20 ou 20' et entrant en contact avec l'autre barre 21 ou 21' par l'intermédiaire d'une surface pouvant être sphérique 36 ou 36' de façon à s'adapter à des extrémités des barres 20 et 21 ou 20' et 21' non parallèles. Il est donc possible de fixer rigidement par encastrement les barres 20 et 21 ou 20' et 21' aux barres respectives 4 et 5 ou à leurs plateaux rigides respectifs 1 et 2. La construction du capteur en est nettement simplifiée.

Ensuite, le capteur précontraint selon l'invention est relativement insensible aux modifications de température : aux dilatations (ou aux retraits), notamment des plateaux rigides 1 et 2 et de la poutre élastique 3, répondent des déformations équivalentes des empilements 30 et 33 ; la valeur de la précontrainte des dispositifs 7 et 6 n'est donc pratiquement pas modifiée.

On peut ici encore introduire un dispositif de mesure du moment de flexion CX entre les traces de raccordement 41 et 42, décalé angulairement de 90° par rapport au dispositif 7 qui mesure le moment de flexion orthogonal CY, et qui peut lui être semblable ; il est possible de le précontraindre également au moyen d'un empilement de rondelles Belleville non représenté ici et disposé entre les traces de raccordement 51 et 52 avec les deux plateaux rigides 1 et 2, l'axe de cet empilement est parallèle à l'axe de la poutre élastique 3 et diamétralement opposé au dispositif de mesure du moment de flexion CX. La poutre élastique 3 doit évidemment posséder alors une faible rigidité de flexion autour de l'axe X.

Comme de plus le capteur pris dans son ensemble est alors très rigide, la réalisation de la figure 3 doit être considérée comme intéressante.

Le capteur selon l'invention permet, pour tous les modes de réalisation décrits ici, des mesures simples et de bonne qualité à l'aide d'un appareillage simple.

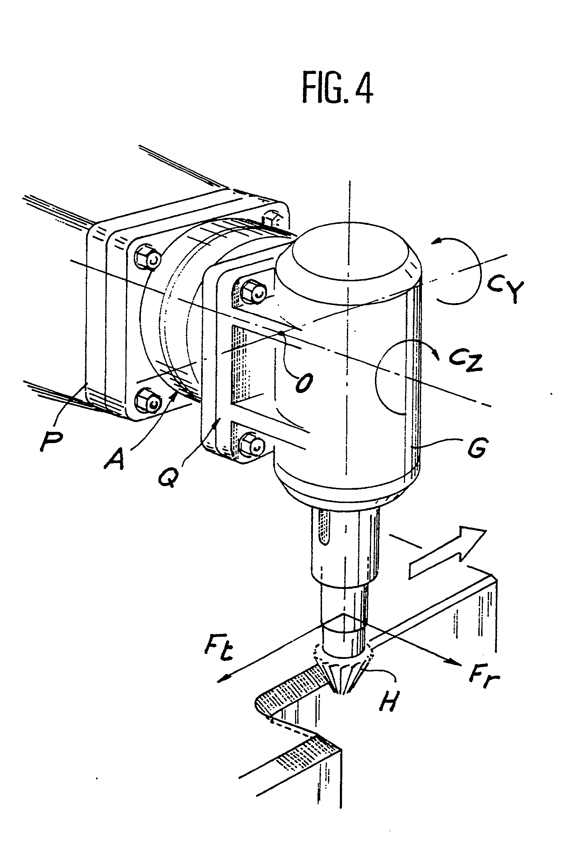

Une application préférée d'un tel capteur est l'usinage. La figure 4 montre que, dans le cas d'ébavurage de cordons ou de chanfreinage à l'aide de robots équipés d'une fraise G, les efforts radial Fr et tangentiel Ft exercés sur l'outil H se traduisent respectivement par un moment de flexion CY et par un moment de torsion CZ au niveau de l'extrémité du bras du robot, alors que les autres composantes du torseur d'efforts sont très inférieures dans ce cas. Si les ensembles mécaniques P et Q représentent respectivement le bras du robot et sa pince sur laquelle est fixée la fraise, le capteur de l'invention, référencé ici A, peut être utilisé pour régler de façon interactive les paramètres de coupe au cours de l'usinage.

Dans des réalisations envisagées, on a prévu que les plateaux 1 et 2 auraient un diamètre sensiblement plus important que la longueur de la poutre élastique 3 et des dispositifs de mesure de moments 6 et 7 ; le capteur serait donc beaucoup plus compact et rigide que ce que les dessins, effectués avec un souci de clarté, ne le laissent supposer, et aurait les proportions d'une pastille.

## Revendications

1. Capteur de moments de flexion et de torsion s'exerçant entre deux ensembles mécaniques (P, Q), caractérisé en ce qu'il comprend, accouplées chacune à un des ensembles (P, Q), deux structures rigides (1, 2, 4, 5) comportant des plateaux (1, 2), sensiblement parallèles, une poutre élastique (3) reliant les deux plateaux rigides et sensiblement perpendiculaire à ceux-ci, un premier dispositif (6) de mesure de déplacement ou d'effort caractérisant le moment de torsion (CZ) de la poutre, et un second dispositif (7) de mesure de déplacement ou d'effort caractérisant un des moments de flexion (CY) de la poutre, les dispositifs (6, 7) de mesure étant reliés à chacune des structures rigides et le second dispositif (7) étant sensiblement rectiligne et parallèle à la poutre (3).

2. Capteur selon la revendication 1, caractérisé en ce qu'un au moins un des dispositifs de mesure de déplacement (6, 7) se compose de deux parties disjointes (10, 10', 12, 12') dont chacune est reliée à une des structures rigides (1, 2, 4, 5).

3. Capteur selon la revendication 2, caractérisé en ce qu'une des parties (12, 12') comprend au moins une bobine électrique (11, 11') et la seconde partie (10, 10') un noyau magnétique plongé dans les bobines (11, 11').

4. Capteur selon la revendication 1, caractérisé en ce qu'au moins un des dispositifs de mesure d'effort (6, 7) se compose d'un élément sensible (22, 22', 35, 35') relié à chacune des structures rigides par des barres (20, 20', 21, 21').

5. Capteur selon la revendication 4, caractérisé en ce que les barres (20, 20', 21, 21') sont reliées à chacune des structures rigides (1, 2, 4, 5) par l'intermédiaire de rotules (23 et 24).

6. Capteur selon la revendication 4, caractérisé en ce qu'au moins un dispositif de mesure de déplacement ou d'effort est précontraint de manière que les sollicitations de traction-compression subies par les barres (20, 20', 21, 21') et l'élément sensible (35, 35') soient toujours de même sens.

7. Capteur selon la revendication 6, caractérisé en ce qu'il comprend une structure comprimée (30, 33) pour précontraindre ledit dispositif de mesure de déplacement ou d'effort, la poutre élastique (3) étant située entre ladite structure comprimée (30, 33) et ledit dispositif de mesure d'effort.

8. Capteur selon la revendication 7, caractérisé en ce que la structure comprimée (30, 33) est formée d'un empilement de rondelles élastiques en forme de coupelle.

9. Capteur selon la revendication 6 ou 7, caractérisé en ce que les sollicitations subies par les barres (20, 20', 21, 21') sont toujours de compression, et en ce que l'élément sensible (35, 35') est en appui contre l'une des barres (20, 20') et entre en contact avec l'autre barre (21, 21') par une surface quasi-ponctuelle (36, 36').

10. Capteur selon l'une quelconque des revendications précédentes, caractérisé en ce qu'il comprend un troisième dispositif de mesure de déplacement ou d'effort s'étendant entre des traces de raccordement (41, 42) et relié à chacune des deux structures rigides (1, 2, 4, 5) et caractérisant le moment de flexion (CX) orthogonal au moment de flexion (CY) que le second dispositif (7) caractérise.

### Patentansprüche

1. Wandler von Biege- und Torsionsmomenten, die zwischen zwei mechanischem Anordnungen (P, Q) auftreten, dadurch gekennzeichnet, daß er zwei steife Strukturen (1, 2, 3, 4), die mit jeder der beiden Anordnungen (P, Q) verbunden sind und zwei im wesentliche parallele Platten (1, 2) umfassen, einen elastischen Träger (3), der die beiden steifen Platten verbindet und im wesentlichen zu diesen senkrecht steht, eine erste Vorrichtung (6) zum Messen der Bewegung oder Belastung, die das Torsionsmoment (CZ) des Trägers kennzeichnet und eine zweite Vorrichtung (7) zum Messen der Bewegung oder Belastung, die eines der Biegemomente (CY) des Trägers kennzeichnet, umfasst, wobei die Meßvorrichtungen (6, 7) mit jeder der steifen Strukturen verbunden sind und die zweite Vorrichtung (7) im wesentlichen geradlinig und parallel zum Träger (3) ist.

2. Wandler nach Anspruch 1, dadurch gekennzeichnet, daß wenigstens eine der Bewegungsmeßvorrichtungen (6, 7) sich aus zwei getrennten Bereichen (10, 10', 12, 12') zusammensetz, von der jeder mit einer der steifen Strukturen (1, 2, 4, 5) verbunden ist.

3. Wandler nach Anspruch 2, dadurch gekennzeichnet, daß einer der Bereiche (12, 12') wenigstens eine elektrischen Spule (11, 11') und daß der zweite Bereich (10, 10') einen in diese Spulen (11, 11') eingesetzten Magnetkern aufweist.

4. Wandler nach Anspruch 1, dadurch gekennzeichnet, daß wenigstens eine der Belastungsmeßvorrichtungen (6, 7) sich aus einem empfindlichen Element (22, 22', 35, 35') zusammensetzt, das mit jeder der steifen Strukturen über Stangen (20, 20', 21, 21') verbunden ist.

5. Wandler nach Anspruch 4, dadurch gekennzeichnet, daß die Stangen (20, 20', 21, 21') über Kugelgelenke (23 und 24) mit jeder der steifen Strukturen (1, 2, 4, 5) verbunden sind.

6. Wandler nach Anspruch 4, dadurch gekennzeichnet, daß wenigstens eine der Vorrichtungen zum Messen der Bewegung oder der Belastung derart vorgespannt ist, daß die von den Stangen (20, 20', 21, 21') und dem empfindlichen Element (35, 35') erfahrenen Zug-Druckanregungen immer im gleichen Sinne sind.

7. Wandler nach Anspruch 6, dadurch gekennzeichnet, daß er eine komprimierte Struktur (30, 33') umfaßt, um die Vorrichtung zum Messen der Bewegung oder der Belastung vorzuspannen, wobei der elastische Träger (3) zwischen der komprimierten Struktur (30, 33) und der Vorrichtung zur Belastungsmessung angeordnet ist.

8. Wandler nach Anspruch 7, dadurch gekennzeichnet, daß die komprimierte Struktur (30, 33) auf einer Anhäufung elastischer Unterlegscheiben in Tellerform besteht.

9. Wandler nach Anspruch 6 oder 7, dadurch gekennzeichnet, daß die von den Stangen (20, 20', 21, 21') erfahrenen Anregungen immer Kompressionsanregungen sind und daß das empfindliche Element (35, 35') sich gegen eine der Stangen (20, 20') stützt und über eine quasi punktförmige Oberfläche (36, 36') mit der anderen Stange in Kontakt tritt.

10. Wandler nach einem der vorhergehenden Ansprüche, dadurch gekennzeichnet, daß er eine dritte Vorrichtung zum Messen von Bewegung oder Belastung umfaßt, die sich zwischen Befestigungslinien (41, 42) erstreckt und bit jeder der steifen Strukturen (1, 2, 4, 5) verbunden ist und das Biegemoment (CX) senkrecht zum Biegemoment (CY), das die zweite Vorrichtung kennzeichnet, kennzeichnet.

### Claims

1. Transducer for the bending and twisting moments exerted between two mechanical assemblies (P, Q), characterized in that it comprises, coupled in each case to one of the assemblies (P, Q), two rigid structures (1, 2, 4, 5) incorporating substantially parallel plates (1, 2), a flexible beam (3) connecting the two rigid plates and substantially parallel thereto, a first force or displacement measuring device (6) characterizing the twisting moment (CZ) of the beam, and a second force or displacement measuring device (7) characterizing one of the bending moments (CY) of the beam, the measuring devices (6, 7) being connected to the two rigid structures and the second device (7) is substantially linear and parallel to the beam (3).

2. Transducer according to claim 1, characterized in that at least one of the displacement measuring devices (6, 7) is in two separate parts (10, 10', 12, 12'), each of which is connected to one of the rigid structure (1, 2, 4, 5).

3. Transducer according to claim 2, characterized in that one of the parts (12, 12') has at least one electric coil (11, 11') and the second part (10, 10') a magnetic core penetrating the coils (11, 11').

4. Transducer according to claim 1, characterized in that at least one of the force measuring devices (6, 7) has a sensitive element (22, 22', 35, 35') connected to each of the rigid structures by bars (20, 20', 21, 21').

5. Transducer according to claim 4, characterized in that the bars (20, 20', 21, 21') are connected to each of the rigid structures (1, 2, 4, 5) by means of ball joints (23, 24).

6. Transducer according to claim 4, characterized in that at least one force or displacement measuring device is prestressed, so that the tension-compression stresses undergone by the bars (20, 20', 21, 21') and the sensitive element (35, 35') are always in the same direction.

7. Transducer according to claim 6, characterized in that it has a compressed structure (30, 33) for prestressing the said displacement or force measuring device, the flexible beam (3) being located between the said compressed structure (30, 33) and the force measuring device.

8. Transducer according to claim 7, characterized in that the compressed structure (30, 33) is formed by a stack of cupped elastic washers.

9. Transducer according to claims 6 or 7, characterized in that the stresses undergone by the bars (20, 20', 21, 21') are always compressive stresses and in that the sensitive element (35, 35') bears against one of the bars (20, 20') and empties into contact with the other bar (21, 21') by a quasi-punctiform surface (36, 36').

10. Transducer according to any one of the preceding claims, characterized in that it has a third force or displacement measuring device (41, 42) extending between the connection lines and connected to each of the two rigid structures (1, 2, 4, 5) and characterizing the bending moment (CX) orthogonal to the bending moment (CY) characterized by the device 7.

# FIG. 1

# FIG. 2

# FIG. 3

# FIG. 4